# EUROPÄISCHE PATENTSCHRIFT

(11) **EP 2 219 811 B1**
(45) Veröffentlichungstag und Bekanntmachung des Hinweises auf die Patenterteilung: **16.03.2016**
(21) Anmeldenummer: 08859488.2
(22) Anmeldetag: 06.12.2008
(51) Int. Cl.: B23B 31/10, B23B 31/30

(54) **VORRICHTUNG ZUM FESTSPANNEN EINES WERKSTÜCKTRÄGERS AN EINEM AN EINER BEARBEITUNGSMASCHINE FIXIERBAREN SPANNFUTTER**
APPARATUS FOR CHUCKING A WORK CARRIER ON A CHUCK WHICH CAN BE FIXED TO A MACHINE TOOL
DISPOSITIF POUR SERRER UN PORTE-OUTIL SUR UN MANDRIN DE SERRAGE POUVANT ÊTRE FIXÉ SUR UNE MACHINE D'USINAGE

(30) Priorität: 13.12.2007 CH 19382007
(43) Veröffentlichungstag der Anmeldung: 25.08.2010
(73) Patentinhaber: Kramer, W. Dietmar, 8331 Auslikon (CH)
(72) Erfinder: Kramer, W. Dietmar, 8331 Auslikon (CH)
(74) Vertreter: Luchs, Willi
(86) Internationale Anmeldenummer: PCT/EP2008/010364
(87) Internationale Veröffentlichungsnummer: WO 2009/074273

(56) Entgegenhaltungen:
- EP-A- 0 900 618
- EP-A- 1 068 919
- EP-A- 1 932 607
- WO-A-93/04815
- DE-A1- 2 232 387
- DE-A1- 10 214 328
- DE-U- 7 131 155
- DE-U1- 20 219 340
- JP-A- 61 090 811
- US-A- 5 015 003

## Beschreibung

Die Erfindung betrifft eine Vorrichtung zum Festspannen eines Werkstückträgers an einem an einer Bearbeitungsmaschine fixierbaren Spannfutter gemäss dem Oberbegriff des Anspruches 1.

Eine Vorrichtung dieser Art ist in EP-A-1 068 919 offenbart. Sie weist Positionierungsmittel zum Zentrieren des Werkstückträgers gegenüber dem Spannfutter auf, und ist mit einer Spannvorrichtung versehen, deren Spannkraft den Werkstückträger in der durch die Positionierungsmittel festgelegten Position am Spannfutter festhält. Das Spannfutter ist zylindrisch bzw. hohlzylindrisch ausgebildet. Der ebenfalls hohlzylindrisch ausgebildete Werkstückträger wird auf das Spannfutter aufgesetzt, derart, dass das Spannfutter in gespanntem Zustand vom Werkstückträger umschlossen ist. Die Spannvorrichtung umfasst eine Mehrzahl von um den Umfang des Spannfutters verteilt angeordneten Spannkugeln, die mit einem in einem Ringraum des Spannfutters angeordneten, federbelasteten Ringkolben wirkverbunden sind. Beim hydraulisch oder pneumatisch entgegen der Federkraft beaufschlagten Ringkolben werden die Spannkugeln in entsprechenden Nuten des Spannfutters gehalten, so dass sie nicht über seine Oberfläche vorstehen. Wird der Druck auf den Ringkolben abgebaut, so werden die Spannkugeln vom Ringkolben unter Einwirkung der Federkraft in eine umlaufende Ringnut des Werkstückträgers hineingepresst und dadurch der Werkstückträger am Spannfutter festgespannt. Die Spannkräfte werden über die punktuell aufliegenden Spannkugeln übertragen und sind dadurch in ihrer Grösse limitiert. Auch ist die Vorrichtung lediglich zum Festspannen von zylindrischen Werkstückträgern geeignet.

Bei einer Vorrichtung gemäss DE-A-22 32 387 sind auf einem Arbeitstisch lagegenau fixierte und radial versetzbare Spanneinheiten sowie Werkstückaufnahmezapfen vorgesehen, welche ein Einspannen eines Werkstückes ermöglichen. Diese Vorrichtung eignet sich für das unmittelbare Spannen von unsymmetrischen Werkstückformen auf einer Bearbeitungsmaschine.

Der vorliegenden Erfindung liegt die Aufgabe zugrunde, eine Vorrichtung der eingangs genannten Art zu schaffen, die eine verbesserte Übertragung von Spannkräften ermöglicht und universeller einsetzbar ist.

Diese Aufgabe wird erfindungsgemäss durch eine Vorrichtung mit den Merkmalen des Anspruches 1 gelöst.

Weitere bevorzugte Ausgestaltungen der erfindungsgemässen Vorrichtung bilden den Gegenstand der abhängigen Ansprüche.

Dadurch, dass die erfindungsgemässe Spannvorrichtung eine Mehrzahl von über den Umfang des Spannfutters verteilt angeordneten Spanneinheiten umfasst, die jeweils eine aus einer Freigabestellung in eine Spannstellung verstellbare Spannbacke aufweisen, wobei die Spannbacken jeweils mit einer Auflagefläche versehen sind, mit welcher sie in der Spannstellung mit einer Umfangsfläche des Werkstückträgers in Flächenberührung bringbar sind, wird die Übertragung von erheblich grösseren Spannkräften ermöglicht als bei der Verwendung von in punktueller Berührung stehenden Spannkugeln.

Dadurch, dass die Spannvorrichtung eine Mehrzahl von über den Umfang des Spannfutters verteilt angeordneten Spanneinheiten umfasst, die jeweils einem segmentförmigen, auf einem Grundteil des Spannfutters befestigten Teil zugeordnet sind, wobei der zwischen die segmentförmigen Teile hineingeführte und über die Positionierungsmittel zentrierte Werkstückträger von den ihn umgebenden Spanneinheiten festspannbar ist, lassen sich auch Werkstückträger festspannen, die eine andere als kreiszylindrische Umfangsform aufweisen und beispielsweise im Querschnitt oval, rechteckförmig oder als regelmässiges Vieleck ausgebildet sind.

Die Erfindung wird nachfolgend anhand der Zeichnung näher erläutert. Es zeigen:
- Fig. 1: in perspektivischer Darstellung ein Ausführungsbeispiel einer erfindungsgemässen Vorrichtung zum Festspannen eines Werkstückträgers an einem an einer Bearbeitungsmaschine fixierbaren Spannfutter, mit einem am Spannfutter festgespannten Werkstückträger;
- Fig. 2: in perspektivischer Darstellung das Spannfutter nach Fig. 1;
- Fig. 3: die Vorrichtung nach Fig. 1 in Draufsicht;
- Fig. 4: einen Teilschnitt nach Linie IV-IV in Fig. 3;
- Fig. 5: eine Variante eines segmentförmigen Teils in perspektivischer Darstellung;
- Fig. 6: einen Querschnitt durch den segmentförmigen Teil nach Fig. 4;
- Fig. 7: einen Längsschnitt eines Teils einer Presse mit mehreren Vorrichtungen; und
- Fig. 8: eine perspektivische Darstellung eines Werkstückträgers und eines positionier- und befestigbaren Werkstückes.

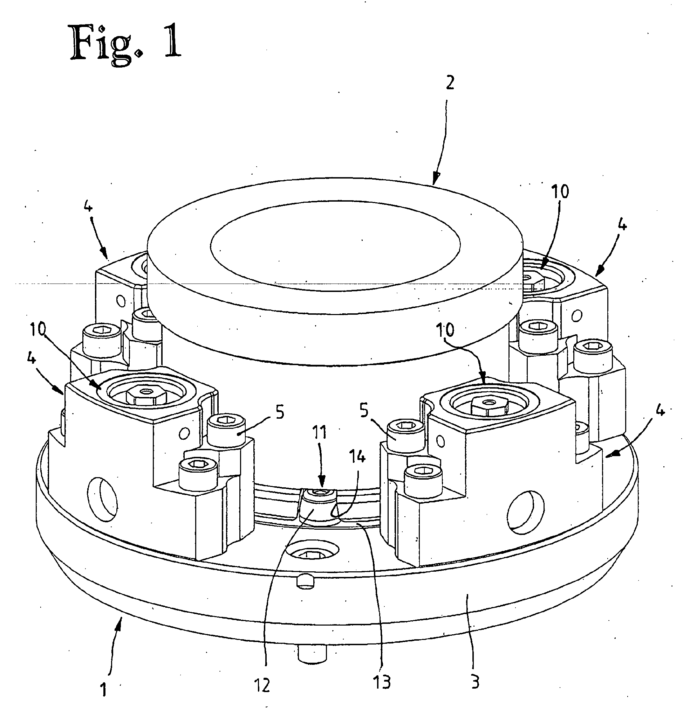

Eine in Fig. 1 dargestellte Vorrichtung zum Festspannen eines Werkstückträgers an einem an einer Bearbeitungsmaschine fixierbaren Spannfutter umfasst einerseits das Spannfutter 1 und anderseits den Werkstückträger 2, der zur Aufnahme eines an der Bearbeitungsmaschine zu bearbeitenden Werkstückes dient. Beim dargestellten Ausführungsbeispiel weist der Werkstückträger 2 eine kreiszylindrische Umfangsform auf.

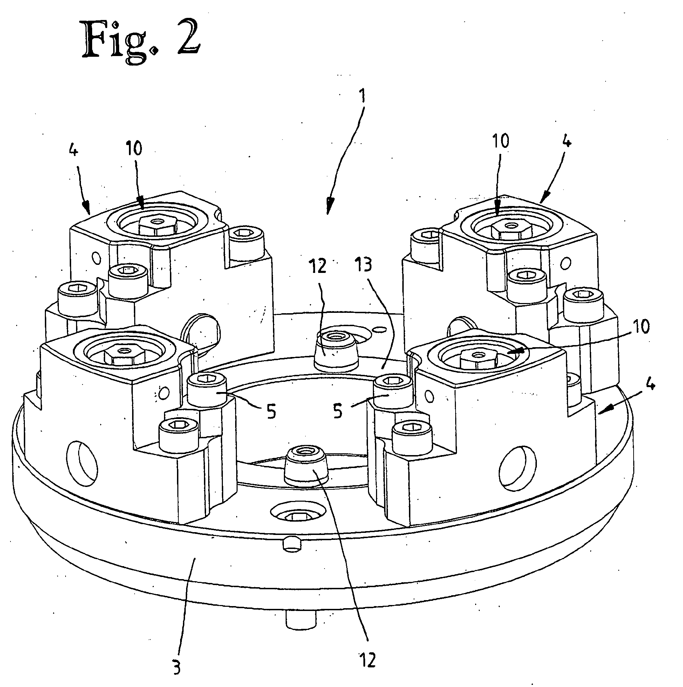

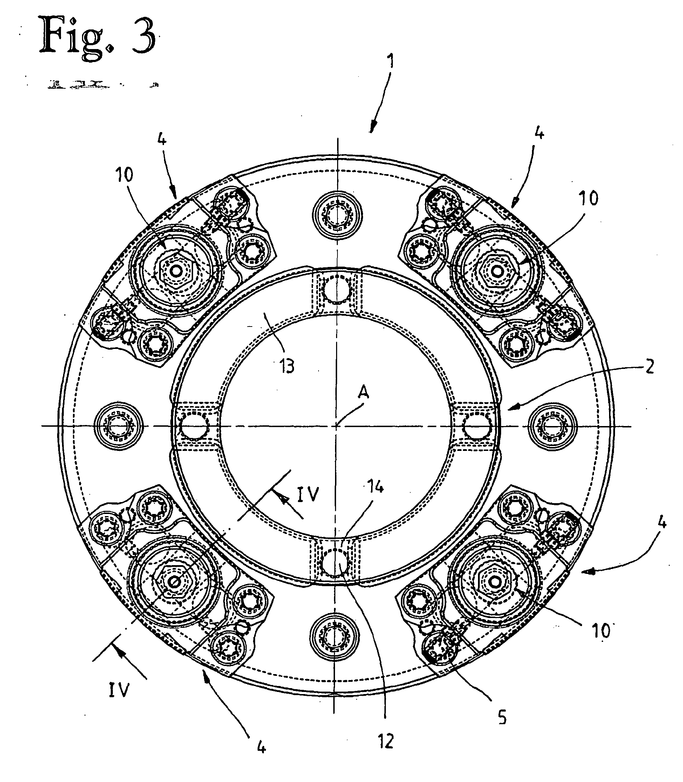

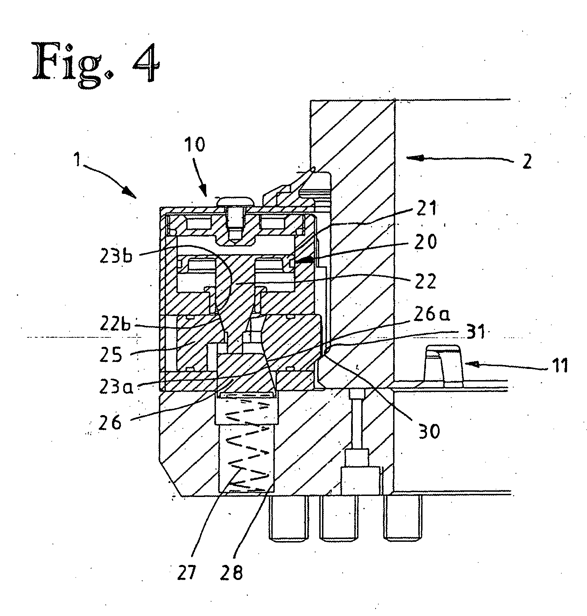

Das Spannfutter 1, das auch aus Fig. 2 und 3 ersichtlich ist, weist einen scheibenförmigen Grundteil 3 auf, in dessen Umfangsbereich stirnseitig eine Mehrzahl von segmentförmigen Teilen 4 angeordnet und jeweils mit dem Grundteil 3 mittels Schrauben 5 verschraubt ist. Die segmentförmigen Teile 4 sind zur Aufnahme von insbesondere aus Fig. 4 ersichtlichen Spanneinheiten 10 zum Festspannen des zwischen die segmentförmigen Teile 4 eingeführten und gegenüber dem Spannfutter 1 positionierten bzw. zentrierten Werkstückträgers 2 vorgesehen, wie noch weiter unten beschrieben wird.

Zum Zentrieren des Werkstückträgers 2 gegenüber dem Spannfutter 1 sind Positionierungsmittel 11 vorgesehen, die einerseits in den Grundteil 3 des Spannfutters 1 eingesetzte, mit einem kegelförmigen Kopf versehene und von einer oberen Grundteilfläche 13 wegragende Zentrierstifte 12 umfassen, und anderseits durch stirnseitig im Werkstückträger 2 angefertigte, radial verlaufende Zentriernuten 14 gebildet sind, die einen dem Kegelkopf der Zentrierstifte 12 entsprechenden Querschnitt aufweisen, und mit denen der Werkstückträger 2 auf die Zentrierstifte 12 aufsetzbar ist. Die gegebenenfalls vier Zentrierstifte 12 sind gleichmässig über den Umfang des Spannfutter-Grundteiles 3 verteilt. Im Prinzip könnten die Positionierungsmittel auch vice versa ausgebildet sein, d.h. die Zentrierstifte beim Werkstückträger 2 und die Zentriernuten im Spannfutter 1.

Gemäss Fig. 4 umfassen die bereits erwähnten, in den segmentförmigen Teilen 4 eingebauten Spanneinheiten 10 jeweils eine Kolben/ZylinderEinheit 20, deren Achse parallel zur zentralen Spannfutterachse A (Fig. 3) verläuft. Der pneumatisch oder hydraulisch beaufschlagbare Kolben 21 dieser Einheit 20 ist mit einem Betätigungselement 22 verbunden, über welches eine Spannbacke 25 quer zur Kolbenbewegung aus einer Freigabestellung in eine Spannstellung und umgekehrt verstellt werden kann. In der in Fig. 4 dargestellten Spannstellung liegt die Spannbacke 25 mit ihrer Auflagefläche 30 auf einer Umfangsfläche 31 des Werkstückträgers 2 auf. Diese beiden Flächen 30, 31 verlaufen schräg in Richtung zur oberen Grundteilfläche 13 bzw. schräg zur Verschieberichtung der Spannbacke 25.

Das Betätigungselement 22 ragt in eine durchgehende Öffnung 23 der Spannbacke 25 hinein und ist mit einem Spannkeil 26 wirkverbunden. Der letztere ist in einer Öffnung 28 des Spannfutter-Grundteiles 3 verschiebbar angeordnet und von einer Feder 27 belastet, die bestrebt ist, den Spannkeil 26 in die Öffnung 23 hineinzudrücken und dabei die Spannbacke 25 über einerseits dem Spannkeil 26 und anderseits der Spannbacke-Öffnung 23 zugeordnete Keilflächen 26a, 23a in die Spannstellung zu drücken. Über das Betätigungselement 22 kann der Spannkeil 26 entgegen der Kraft der Feder 27 aus der Spannbacke-Öffnung 23 herausgedrückt und dabei die Spannbacke 25 über einerseits dem Betätigungselement 22 und anderseits der Spannbacke-Öffnung 23 zugeordnete Keilflächen 22b, 23b aus der Spannstellung in die Freigabestellung gebracht werden.

Die Spannbacke 25 wird in der Freigabestellung gehalten, solange auf den Kolben 21 ein Druck entgegen der Kraft der Feder 27 ausgeübt wird. Soll nun ein im Spannfutter 1 mittels Positionierungsmittel 11 zentrierter Werkstückträger 2 festgespannt werden, so wird der auf den Kolben 21 ausgeübte Druck abgebaut und die Spannbacke 25 wird über den Spannkeil 26 durch die Kraft der Feder 27 in die Spannstellung gedrückt. Allenfalls könnte bei einer einteiligen Ausbildung Betätigungselement/Spannkeil auf den Kolben 21 ein zusätzlicher Schliessdruck ausgeübt werden.

Erfindungsgemäss stehen die Spannbacken 25 in der Spannstellung jeweils mit ihren Auflagenflächen 30 in einer Flächenberührung mit der Umfangsfläche 31 des Werkstückträgers 2, wodurch die Übertragung von erheblich grösseren Spannkräften möglich ist als bei der Verwendung von in punktueller Berührung stehenden Spannkugeln.

Dadurch, dass die Spannvorrichtung eine Mehrzahl von über den Umfang des Spannfutters 1 verteilt angeordneten Spanneinheiten 10 umfasst, die vorzugsweise jeweils einem segmentförmigen, auf einem Grundteil des Spannfutters befestigten Teil 4 zugeordnet sind, wobei der zwischen die segmentförmigen Teile hineingeführte und über die Positionierungsmittel zentrierte Werkstückträger von den ihn umgebenden Spanneinheiten festspannbar ist, lassen sich auch Werkstückträger festspannen, die eine andere als kreiszylindrische Umfangsform aufweisen und beispielsweise im Querschnitt oval, rechteckförmig oder als regelmässiges Vieleck ausgebildet sind.

Zum Festspannen eines eine kreiszylindrische Umfangsform aufweisenden Werkstückträgers könnte selbstverständlich die Mehrzahl von Spanneinheiten statt in einzelnen segmentförmigen Teilen in einem einzigen hohlzylindrischen Teil untergebracht werden.

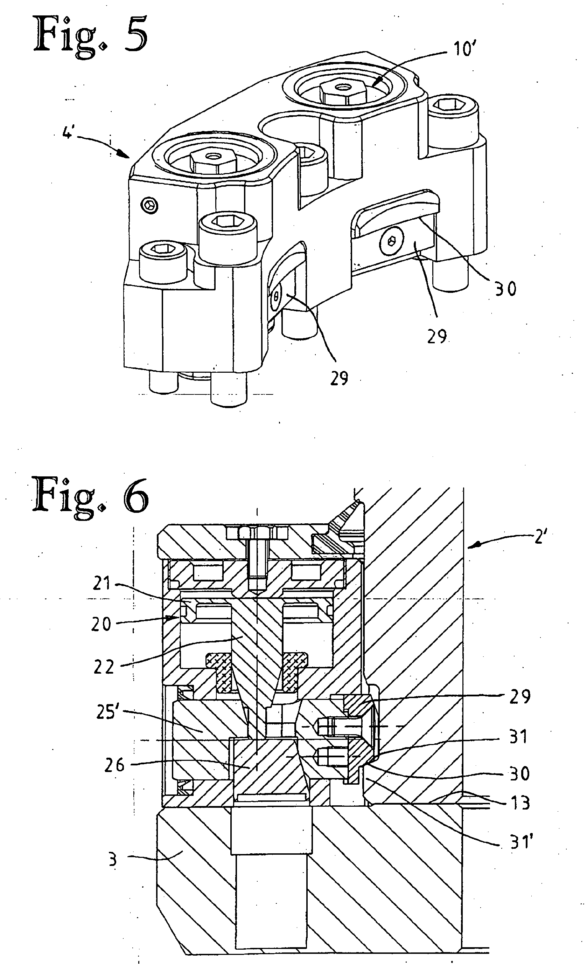

Fig. 5 und Fig. 6 veranschaulichen ein segmentförmiges Teil 4', welchem im Unterschied zu dem segmentförmigen Teil 4 nach Fig. 1 bis Fig. 4 jeweils zwei benachbarte an sich gleiche Spannbacken 25' mit Spanneinheiten 10' zugeordnet sind, welche jeweils im Wesentlichen gleich ausgebildet sind wie diejenigen nach Fig. 4 und daher dieselben Bezugszeichen verwendet sind und auf die obigen Erläuterungen verwiesen wird. Nachfolgend sind nurmehr die unterschiedlichen Merkmale erläutert.

Zweckmässigerweise ist diese Spannbacke 25' vorne mit einem an ihr lösbar befestigen Einsatz 29 versehen, wobei an letzterem die Auflagefläche 30 vorgesehen ist, die im verspannten Zustand auf die Umfangsfläche 31 des Werkstückträgers 2' drückt. Diese beiden Auflageflächen 30, 31 verlaufen schräg in Richtung zur oberen Grundteilfläche 13 bzw. schräg zur Verschieberichtung der Spannbacke 25. Der Winkel zwischen diesen Auflageflächen 30, 31 und der Grundteilfläche 13 beträgt vorzugsweise weniger als 30°, beispielsweise 20°. Damit wird ein Verkeilen zwischen dem Einsatz 29 und dem Werkstückträger 2' wirksam verhindert. Mit diesen Einsätzen 29 besteht der weitere Vorteil, dass diese je nach Höhe des Absatzes 31' des Werkstückträgers 2' entsprechend angepasst sein können, wie dies in den beiden Fig. 5 und Fig. 6 illustriert ist, bei dem diese Auflagefläche 30 jeweils in unterschiedlicher Höhe platziert sind.

Durch die Anordnung zwei solcher Spannbacken 25' bei einem segmentförmigen Teil 4' kann gegenüber der Variante nach Fig. 1 bis Fig. 4 mit geringeren Spannkräften pro Flächeneinheit gearbeitet werden und auch die auf die Spanneinheit 10' entstehenden Reaktionskräfte sind entsprechend besser verteilt.

Selbstverständlich könnten pro segmentförmigen Teil noch mehr als zwei Spannbacken in diesem enthalten sein, welche jeweils radial zum Werkstückträger verstellbar angeordnet sind.

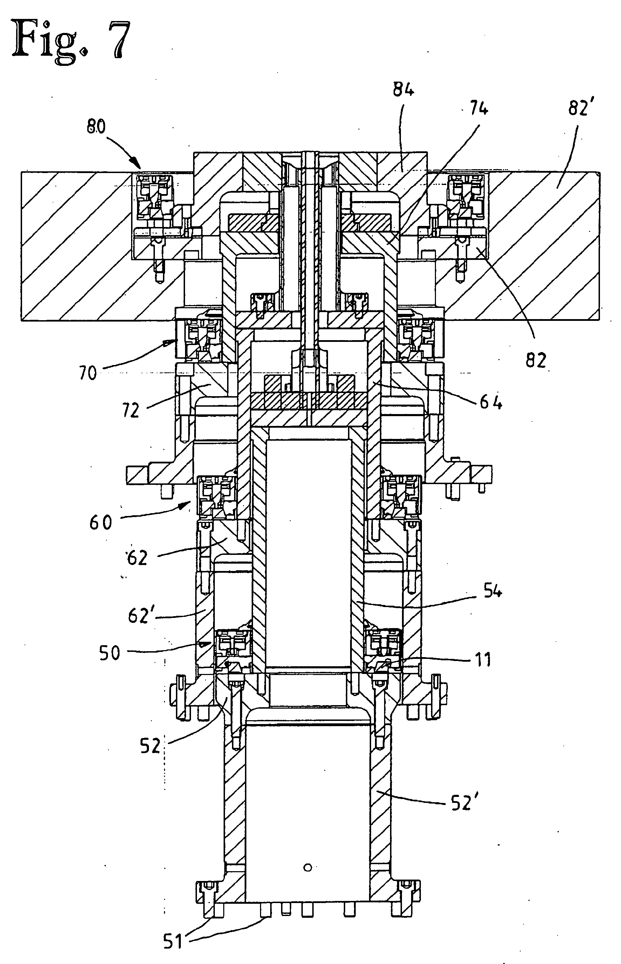

Fig. 7 zeigt eine Variante einer Anwendung von mehreren erfindungsgemässen Vorrichtungen an einer nicht näher gezeigten Bearbeitungsmaschine, welche beispielsweise als Presse für Kunststoffe oder Sintermetallteile dient.

Die erfindungsgemässen Vorrichtungen 50, 60, 70, 80 sind jeweils in der oben zu den Fig. 1 bis Fig. 4 erläuterten Ausführung ausgestaltet und daher nicht mehr näher erläutert. Eine ein erstes Spannfutter 52 haltende und dieses in einer definierten Höhe positionierenden Hülse 52', in welcher weitere Werkzeuge sich hindurch erstrecken können, ist an der nicht dargestellten Bearbeitungsmaschine über Befestigungsmittel 51 lösbar gehalten.

Diese erste Vorrichtung 50 ihrerseits hält einen als Distanzrohr zu der Druckplatte ausgebildeten Werkstückträger 54, welcher im unteren Teil von einer weiteren an der Bearbeitungsmaschine fixierten Hülse 62' konzentrisch umgeben ist. An jener Hülse 62' ist ein weiteres Spannfutter zentrisch umgeben ist. An jener Hülse 62' ist ein weiteres Spannfutter 62 der Vorrichtung 60 gehalten, die einen weiteren als Stempelteil dienenden Werkstückträger 64 festspannt. Oberhalb dieses Werkstückträgers 64 sind Vorrichtungen 70, 80, Stempel 74, 84, Spannfutter 72, 82 und ein Ring 82' übereinander angeordnet. Dieser Ring 82' ist Teil der Presse und dient als Verankerungsplatte für die Spannvorrichtung 80.

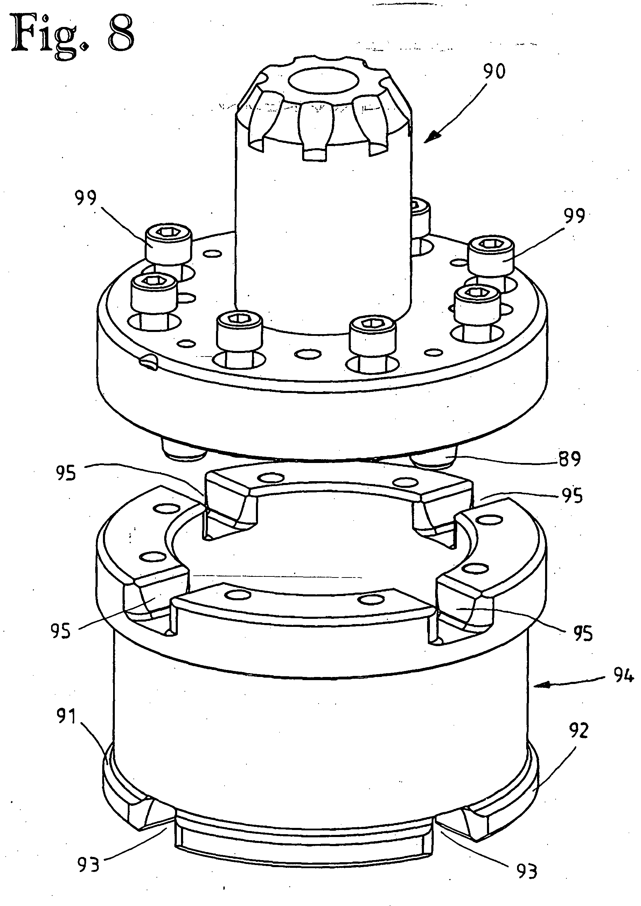

In Fig. 8 sind ein als Distanzrohr zu der Druckplatte ausgebildeter Werkstückträger 94 und ein auf diesen positionier- und befestigbares Werkstück 90 perspektivisch veranschaulicht. Der Werkstückträger 94 hat in analoger Weise wie bei dem Ausführungsbeispiel gemäss Fig. 4 an seinem unteren Ende eine flanschartige Erweiterung 92 mit einer schrägen Umfangsfläche 91, an welcher beim Verspannen die Spannbacken (25) des Spannfutters (1) in Flächenkontakt gebracht werden.

Ebenso sind - wie auch in Fig. 3 dargestellt ist - als Positionierungsmittel vorteilhaft vier um je 90° versetzte radiale Zentriernuten 93 auf seiner Unterseite vorgesehen, mittels welchen dieser Werkstückträger 94 sehr genau auf einem Spannfutter (1) zentriert werden kann. Die konisch ausgebildeten Zentrierstifte sind leicht grösser in der Breite als die konischen Zentriernuten dimensioniert. Damit wird bei der Verspannung des Werkstückträgers 94 auf dem Spannfutter (1) nicht nur das Spiel zwischen diesen aufgehoben, sondern darüber hinaus durch elastische Deformation zwischen Zentrierstift und Zentriernut auch eine Positionierung in Achsrichtung derselben erreicht.

Dieser rohrförmige Werkstückträger 94 weist auch an seinem oberen Ende Positionierungsmittel auf, vorteilhaft wiederum vier um je 90° versetzte radiale Zentriernuten 95, in welche entsprechend ausgebildete Zentrierstifte 89 auf der Unterseite des Werkstückes 90 ebenso für eine genaue Positionierung zentrierbar sind. Die Zentriernuten 93 sind mit einem solchen Querschnitt versehen, dass auf der Unterseite des Werkstückes 90 zugeordnete Zentrierstifte 89 für dieses Positionieren darin einsteckbar sind. Mittels Schrauben 99 oder dergleichen wird das Werkstück 90 auf dem Werkstückträger 94 befestigt.

Die Durchmesser der Enden bzw. den Stirnseiten des Werkstückträgers sind in Fig. 8 gleich gross ausgebildet. Diese könnten aber auch unterschiedlich gross gewählt sein, je nach Grösse des Werkstückes im Verhältnis zu dem Spannfutter.

Selbstverständlich könnte der Werkstückträger 94 auch an der einen Stirnseite, unten oder oben, mit Zentriernuten 93 oder 95 und gegenüberliegend mit Zentrierstiften, oder auch an beiden Stirnseiten mit Zentrierstiften versehen sein.

## Patentansprüche

1. Vorrichtung zum Festspannen eines Werkstückträgers (2) an einem an einer Bearbeitungsmaschine fixierbaren Spannfutter (1), mit Positionierungsmitteln (11) zum Zentrieren des Werkstückträgers (2) gegenüber dem Spannfutter (1), und mit einer Spannvorrichtung, deren Spannkraft den Werkstückträger (2) in der durch die Positionierungsmittel (11) festgelegten Position am Spannfutter (1) festhält, wobei die Spannvorrichtung eine Mehrzahl von über den Umfang des Spannfutters (1) verteilt angeordneten Spanneinheiten (10) umfasst, die jeweils eine aus einer Freigabestellung in eine Spannstellung verstellbare Spannbacke (25) aufweisen, wobei das Spannfutter (1) einen Grundteil (3) aufweist, **dadurch gekennzeichnet, dass** ein Umfangsbereich des Grundteiles stirnseitig eine Mehrzahl von segmentförmigen Teilen (4) angeordnet ist, die mit dem Grundteil (3) fest verbunden sind und jeweils mindestens eine der Spanneinheiten (10) aufnehmen, wobei der Werkstückträger (2) zwischen die segmentförmigen Teile (4) hineinführbar, über die einerseits dem Grundteil (3) und anderseits dem Werkstückträger (2) zugeordneten Positionierungsmittel (11) zentrierbar und von den ihn umgebenden Spanneinheiten (10) festspannbar ist.

2. Vorrichtung nach Anspruch 1, **dadurch gekennzeichnet; dass** die Spannbacken (25) jeweils mit einer Auflagefläche (30) versehen sind, mit welcher sie in der Spannstellung mit einer Umfangsfläche (31) des Werkstückträgers (2) in Flächenberührung bringbar sind.

3. Vorrichtung nach Anspruch 1, **dadurch gekennzeichnet, dass** jede Spanneinheit (10) eine Kolben/Zylinder-Einheit (20) umfasst, deren Achse parallel zur zentralen Spannfutterachse (A) verläuft, wobei der Kolben (21) mit einem Betätigungselement (22) zum Verstellen der Spannbacke (25) quer zu dieser Achse verbunden und entgegen der Kraft einer Feder (27) pneumatisch oder hydraulisch betätigbar ist.

4. Vorrichtung nach Anspruch 3, **dadurch gekennzeichnet, dass** das Betätigungselement (22) in eine durchgehende Öffnung (23) der Spannbacke (25) hineinragt und mit einem von der Feder (27) belasteten Spannkeil (26) wirkverbunden ist, welcher Spannkeil (26) in der Freigabestellung der Spannbacke (25) über das Betätigungselement (22) ausserhalb der Spannbacke-Öffnung (23) gehalten wird und unter Einwirkung der Feder (27) in die Öffnung (23) hineinführbar ist, um die Spannbacke (25) über einerseits dem Spannkeil (26) und anderseits der Öffnung (23) zugeordnete Keilflächen (26a, 23a) in die Spannstellung zu bringen.

5. Vorrichtung nach Anspruch 4, **dadurch gekennzeichnet, dass** der Spannkeil (26) durch pneumatisches oder hydraulisches Beaufschlagen des Kolbens (21) aus der Spannbacke-Öffnung (23) hinausschiebbar und dabei die Spannbacke (25) über einerseits dem Betätigungselement (22) und anderseits der Öffnung (23) zugeordnete Keilflächen (22b, 23b) aus der Spannstellung in die Freigabestellung bringbar ist, und dass der Spannkeil (26) bei Entlastung des Kolbens (21) und allenfalls bei zusätzlichem Schliessdruck durch die Kraft der Feder (27) in die Spannbacke-Öffnung (23) hineinschiebbar ist.

6. Vorrichtung nach Anspruch 1, **dadurch gekennzeichnet, dass** die Positionierungsmittel (11) in den Grundteil (3) des Spannfutters (1) eingesetzte, mit einem kegelförmigen Kopf versehene und von einer oberen Grundteilfläche (13) wegragende Zentrierstifte (12) umfassen, wobei der Werkstückträger (2) stirnseitig mit Zentriernuten (14) versehen ist, die einen dem Kegelkopf der Zentrierstifte (12) entsprechenden Querschnitt aufweisen und mit denen der Werkstückträger (2) auf die Zentrierstifte (12) aufsetzbar ist, oder dass diese Positionierungsmittel vice versa, d.h. die Zentrierstifte beim Werkstückträger (2) und die Zentriernuten im Spannfutter (1), angeordnet sind.

7. Vorrichtung nach Anspruch 1, **dadurch gekennzeichnet, dass** der Werkstückträger (2) eine kreiszylindrische Umfangsform aufweist oder im Querschnitt oval, rechteckförmig oder als regelmässiges Vieleck ausgebildet ist.

8. Vorrichtung nach Anspruch 2, **dadurch gekennzeichnet, dass** die Umfangsfläche (31) bzw. Umfangsflächen des zwischen den Spanneinheiten (10) positionierten Werkstückträgers (2) sowie die auf diesen aufzuliegenden Auflageflächen (30) der Spannbacken (25) schräg in Richtung zur oberen Grundteilfläche (13) verlaufen.

## Claims

1. Device for clamping a workpiece holder (2) to a collet chuck (1) fixable on a working machine, with positioning means (11) for centring the workpiece holder (2) relative to the collect chuck (1), and with a tensioning device, whose clamping force holds on the workpiece holder (2) on the collect chuck (1) in the predetermined position of the positioning means (11), wherein the tensioning device includes a plurality of tensioning units (10), which are arranged as distributed over the circumference of the collect chuck (1) and each having a clamping jaw (25), which is adjustable from a release position to a clamping position, wherein the said collect chuck (1) has a base part (3), **characterized in that**
a plurality of segment-shaped parts (4) are arranged in the circumference region of the base part frontally, which are fixedly connected with the base part (3) and incorporate at least one of the tensioning units (10), wherein the workpiece holder (2) is leadable in between the segment shaped parts (4) centrable on the positioning means (11), which are associated on the one hand with the base part (3) and on the other hand with the workpiece holder (2) and clampable by the tensioning units (10) surrounding the workpiece holder (2).

2. Device according to Claim 1, **characterised in that** each of the clamping jaws (25) is provided with a bearing surface (30), with which they can be brought into surface contact with a peripheral surface (31) of the workpiece holder (2) in the clamping position.

3. Device according to Claim 1, **characterised in that** each tensioning unit (10) incorporates a piston/cylinder-unit (20), whose axis extends parallel to the central collect chuck axis (A), wherein the piston (21) is connected with an actuator element (22) for the adjustment of the clamping jaw (25) and is pneumatically or hydraulically operable against the force of a spring (27).

4. Device according to Claim 3, **characterised in that** the actuator element (22) protrudes into a throughout opening (23) of the clamping jaw (25) and is operatively connected with a clamping wedge (26) loaded by the spring (27), which clamping wedge (26) is held in the releasing position of the clamping jaw (25) via the actuator element (22) outside the clamping jaw opening (23) and is guidable into the opening (23) thus under the effect of the spring (27) to bring the clamping jaw (25) into the clamping position on the one hand via the clamping wedge (26) and on the other hand the wedge surfaces (26a, 23a), which are associated with the opening (23).

5. Device according to Claim 4, **characterised in that** the clamping wedge (26) is guidable out of the clamping jaw opening (23) through loading pneumatically or hydraulically the piston (21) and thereby the clamping jaw (25) can be brought out of the clamping position into the release position on the one hand via the actuator element (22) and on the other hand via the wedge surfaces (22b, 23b) associated with the opening (23) and that the clamping wedge (26) is guidable into the clamping jaw opening (23) by relieving the piston (21) and if needed with additional closing pressure of the force of the spring (27).

6. Device according to Claim 1, **characterised in that** the positioning means (11) comprise centring pins (12) inserted into the base part (3) of the collect chuck (1) provided with a tapered head and upstanding from an upper base part surface (13), wherein the workpiece holder (2) is frontally provided with centring grooves (14) having a cross-section complying with the tapered head of the centring pins (12) and with which the workpiece holder (2) can be placed on the centring pins (12), or that the positioning means vice versa that means the centring pins of the workpiece holder (2) and the centring grooves are arranged inside the collet chuck (1).

7. Device according to Claim 1, **characterised in that** the workpiece holder (2) having a circular cylindrical peripheral shape or is shaped in cross-section oval, rectangular formed or as regular polygon.

8. Device according to Claim 2, **characterised in that** the peripheral surface (31) respectively peripheral surfaces of the workpiece holder (2) positioned between the clamping units (10) as well as the bearing surfaces (30) of the clamping jaws (25) bear on these extend obliquely towards the upper base part surface (13).

## Revendications

1. Dispositif de serrage d'un porte-outil (2) sur un mandrin (1) de serrage pouvant être immobilisé sur une machine d'usinage, comprenant des moyens (11) de mise en position pour centrer le porte-outil (2) par rapport au mandrin (1) de serrage et comprenant un dispositif de serrage, dont la force de serrage maintient le porte-outil (2) sur le mandrin (1) de serrage dans la position fixée par les moyens (11) de mise en position, dans lequel le dispositif de serrage comprend une pluralité d'unités (10) de serrage, qui sont réparties sur le pourtour du mandrin (1) de serrage et qui ont respectivement une mâchoire (25) de serrage réglable d'une position de desserrage à une position de serrage, le mandrin (1) de serrage ayant une embase (3), **caractérisé en ce que** dans la partie périphérique de l'embase est disposée du côté frontal une pluralité de parties (4) en forme de segment, qui sont reliées fixement à l'embase (3) et qui reçoivent respectivement au moins l'une des unités (10) de serrage, le porte-outil (2) pouvant passer entre les parties (4) en forme de segment, être centré par les moyens (11) de mise en position associés d'une part à l'embase (3) et d'autre part au porte-outil (2) et être serré par les unités (10) de serrage qui l'entourent.

2. Dispositif suivant la revendication 1, **caractérisé en ce que** les mâchoires (25) de serrage sont pourvues respectivement d'une surface (30) d'appui, par laquelle elles peuvent, en la position de serrage, être mises en contact de surface avec une surface (31) périphérique du porte-outil (2).

3. Dispositif suivant la revendication 1, **caractérisé en ce que** chacune des unités (10) de serrage comprend une unité (20) piston/cylindre, dont l'axe est parallèle à l'axe (A) central du mandrin de serrage, le piston (21) pouvant être relié à un élément (22) d'actionnement pour déplacer la mâchoire (25) de serrage transversalement à cet axe et être actionné pneumatiquement ou hydrauliquement à l'encontre de la force d'un ressort (27).

4. Dispositif suivant la revendication 3, **caractérisé en ce que** l'élément (22) d'actionnement pénètre dans une ouverture (23) traversante de la mâchoire (25) de blocage et est relié en action avec un coin (26) de serrage soumis à l'action du ressort (27), lequel coin (26) de serrage est, dans la position de desserrage de la mâchoire (25) de serrage, maintenu à l'extérieur de l'ouverture (23) de la mâchoire de serrage par l'élément (22) d'actionnement et peut pénétrer dans l'ouverture (23) sous l'action du ressort (27) pour mettre la mâchoire (25) de serrage en la position de serrage par des surfaces (26a, 23a) de coin associées d'une part au coin (26) de serrage et d'autre part à l'ouverture (23).

5. Dispositif suivant la revendication 4, **caractérisé en ce que** le coin (26) de serrage peut sortir de l'ouverture (23) de la mâchoire de serrage par l'alimentation pneumatique ou hydraulique du piston (21) et faire passer ainsi la mâchoire (25) de serrage de la position de serrage à la position de desserrage par des surfaces (22b, 23b) de coin associées d'une part à l'élément (22) d'actionnement, et d'autre part à l'ouverture (23), et **en ce que** le coin (26) de serrage peut, si le piston (21) est déchargé et à la rigueur par une pression de fermeture supplémentaire, pénétrer par la force du ressort (27) dans l'ouverture (23) de la mâchoire de serrage.

6. Dispositif suivant la revendication 1, **caractérisé en ce que** les moyens (11) de mise en position comprennent des broches (12) de centrage insérées dans l'embase du mandrin (1) de serrage pourvues d'une tête de forme conique et issues d'une surface (13) supérieure de l'embase, le porte-outil (2) étant pourvu du côté frontal de rainures (14) de centrage, qui ont une section transversale correspondant à la tête conique des broches (12) de centrage et par lesquelles le porte-outil (2) peut être mis sur les broches (12) de centrage ou **en ce que** ces moyens de mise en position sont disposés en vice-versa, c'est-à-dire les broches de centrage sur le porte-outil (2) et les rainures de centrage dans le mandrin (1) de serrage.

7. Dispositif suivant la revendication 1, **caractérisé en ce que** le porte-outil a une forme périphérique cylindrique de section circulaire ou a une section transversale, ovale, rectangulaire ou sous la forme d'un polygone régulier.

8. Dispositif suivant la revendication 2, **caractérisé en ce que** la surface (31) périphérique ou les surfaces périphériques du porte-outil (2) mis en position entre les unités (10) de serrage, ainsi que les surfaces (30) d'appui, s'y appuyant, des mâchoires (25) de serrage s'étendent en oblique dans la direction allant vers la surface (13) supérieure de l'embase.
